# EUROPÄISCHE PATENTSCHRIFT

(11) **EP 2 995 192 B1**
(45) Veröffentlichungstag und Bekanntmachung des Hinweises auf die Patenterteilung: **23.08.2017**
(21) Anmeldenummer: 15169827.1
(22) Anmeldetag: 29.05.2015
(51) Int. Cl.: A01F 15/08

(54) **QUADERBALLENPRESSE**
SQUARE BALER
PRESSE À BALLES CARRÉES

(30) Priorität: 15.09.2014 DE 102014013325
(43) Veröffentlichungstag der Anmeldung: 16.03.2016
(73) Patentinhaber: Usines Claas France S.A.S, 57140 St. Rémy / Woippy (FR)
(72) Erfinder: HESSELMANN, Ulrich, 54439 Saarburg (DE)
(74) Vertreter: Budach, Steffen

(56) Entgegenhaltungen:
- DE-A1- 19 621 391
- US-A1- 2014 158 002

## Beschreibung

Die vorliegende Erfindung betrifft eine Quaderballenpresse. Um landwirtschaftliches Erntegut zu verdichten und zum Ballen zu formen, umfasst eine solche Quaderballenpresse herkömmlicherweise einen in einem Presskanal oszillierend beweglichen Kolben und diverse Nebenaggregate wie etwa eine Aufnahmeeinrichtung zum Aufnehmen des zu verdichtenden Ernteguts vom Boden, einen Häcksler zum Zerkleinern des Ernteguts, einen Raffer zum Zuführen des aufgenommenen und gegebenenfalls zerkleinerten Ernteguts zum Presskanal und einen Knoter zum Verknoten des fertigen Ballens.

Eine derartige Ballenpresse für landwirtschaftliches Erntegut ist aus der DE 196 21 391 A1 bekannt. Die Ballenpresse weist dabei zumindest ein Planeten-Summengetriebe auf, welches in einem Antriebsstrang der beweglich angetriebenen Förder-, Preß- und/oder Bindeorgane angeordnet ist, wodurch Drehzahlunterschiede ausgleichen werden können.

Ein Antriebsstrang einer solchen Quaderballenpresse umfasst im Allgemeinen eine Antriebswelle, die sowohl den Presskolben als auch die Nebenaggregate antreibt. Um bei begrenzter Drehmomentbelastbarkeit der Antriebswelle eine für den Presskolben und die Nebenaggregate ausreichende Antriebsleistung übertragen zu können, rotiert die Welle im Allgemeinen mit einer Drehzahl, die wesentlich höher ist als die diversen Bewegungsfrequenzen des Presskolbens und der Nebenaggregate, und ein Getriebe ist zwischen Antriebswelle einerseits und Presskolben und Nebenaggregaten andererseits erforderlich, um letztere mit den jeweils benötigten Frequenzen anzutreiben. Herkömmlicherweise ist die erste Stufe eines solchen Getriebes ein Untersetzungsgetriebe, das die Drehzahl der Welle in die Bewegungsfrequenz des Presskolbens umsetzt und das parallel den Presskolben und eine zweite Getriebestufe antreibt, die die Nebenaggregate versorgt. Während die Nebenaggregate meist kontinuierlich angetrieben sind, arbeitet der Presskolben nur zeitweilig, benötigt dann aber ein hohes Drehmoment. Die erste Getriebestufe muss robust genug ausgelegt sein, um das Drehmoment für den Presskolben und die Nebenaggregate bereitstellen zu können, was im Allgemeinen ein hohes Gewicht und hohen Platzbedarf des Getriebes und dementsprechend hohe Fertigungskosten mit sich bringt.

Aufgabe der vorliegenden Erfindung ist, eine Quaderballenpresse zu schaffen, deren Antriebsstrang geringes Gewicht bzw. geringen Platzbedarf mit hoher Drehmomentbelastbarkeit verbindet.

Die Aufgabe wird gelöst, indem bei einer Quaderballenpresse mit einem in einem Presskanal oszillierend beweglichen Kolben und wenigstens einem Nebenaggregat, wobei der Kolben und das Nebenaggregat über einen gemeinsamen Antriebsstrang angetrieben sind, der eine Leistungsverzweigung und ein wenigstens den Presskolben antreibendes Untersetzungsgetriebe umfasst, das Nebenaggregat und das Untersetzungsgetriebe parallel zueinander an die Leistungsverzweigung angeschlossen sind. Da das Untersetzungsgetriebe nicht der gesamten auf den Antriebsstrang übertragenen Antriebsleistung ausgesetzt ist, sondern nur einem um die vom Nebenaggregat benötigte Leistung verminderten Teil, kann das Untersetzungsgetriebe relativ leicht ausgelegt werden bzw. die erfindungsgemäße Quaderballenpresse kann mit höherer Leistung als eine herkömmliche Quaderballenpresse angetrieben werden, ohne dass dafür die Belastbarkeit des Untersetzungsgetriebes erhöht werden muss.

An einem Wellenabschnitt, der einen Drehmomenteingangsanschluss des Antriebsstrangs mit der Leistungsverzweigung verbindet, kann ein Schwungrad angeordnet sein, um einen die Ballenpresse antreibenden Motor (der Teil der Ballenpresse oder eines Zugfahrzeugs, an das die Ballenpresse angehängt ist, sein kann) von Drehmomentstößen des Presskolbens oder des Nebenaggregats abzuschirmen und Drehzahlschwankungen des Antriebsstrangs zu verringern.

An demselben Wellenabschnitt kann anstelle des Schwungrades oder in Kombination mit diesem, vorzugsweise zwischen dem Drehmomenteingangsanschluss und dem Schwungrad, eine Reibkupplung vorgesehen sein, die in der Lage ist, das vom Drehmomenteingangsanschluss zur Leistungsverzweigung übertragene Drehmoment zu begrenzen bzw. die Drehmomentübertragung im Falle einer Blockade der Ballenpresse zu unterbrechen und so ein Abwürgen des Motors zu verhindern. Die Platzierung der Reibkupplung zwischen Drehmomenteingangsanschluss und Schwungrad gibt dem Schwungrad die Möglichkeit, Schwankungen des von Nebenaggregat und Presskolben benötigten Drehmoments auszugleichen und so die Wahrscheinlichkeit eines Schlüpfens der Reibkupplung zu verringern. Unter den verschiedenen für eine Quaderballenpresse in Betracht kommenden Nebenaggregaten hat ein Schneidwerk zum Zerkleinern von dem Presskanal zuzuführendem Gut die höchste Leistungsaufnahme, so dass, indem die hierfür benötigte Leistung an der Leistungsverzweigung abgezweigt wird, eine deutliche Entlastung des den Presskolben antreibenden Untersetzungsgetriebes erreichbar ist.

Die Leistungsverzweigung kann eine mit dem Drehmomenteingangsanschluss verbundene Hauptwelle und eine Zweigwelle umfassen. Da die Leistungsübertragung von der Hauptwelle auf die Zweigwelle im Allgemeinen mit Reibungsverlusten verbunden ist, sollte vorzugsweise das Nebenaggregat über die Zweigwelle angetrieben sein, während das Untersetzungsgetriebe, das zum Antreiben des Presskolbens den größeren Teil der verfügbaren Antriebsleistung aufnimmt, über die Hauptwelle direkt, ohne eine weitere verlustbehaftete Drehmomentwandlung, mit dem Drehmomenteingangsanschluss verbunden ist. Die kompakte Leistungsverzweigung umfasst ferner eine Kegelradstufe. Auch das Untersetzungsgetriebe umfasst wenigstens eine Kegelradstufe. Die Kegelradstufen des Untersetzungsgetriebes und der Leistungsverzweigung umfassen auf einer gleichen Welle angeordnete antriebsseitige Kegelräder. Auf derselben Welle wie die antriebsseitigen Kegelräder ist vorzugsweise auch das Schwungrad angeordnet.

Der Drehmomenteingangsanschluss kann insbesondere als Zapfwellenkupplung zum Anschließen an eine Zapfwelle einer Zugmaschine ausgebildet sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Schnittdarstellung einer erfindungsgemäßen Ballenpresse; und
- Fig. 2: eine schematische Darstellung eines Antriebsstrangs der Ballenpresse aus Fig. 1.

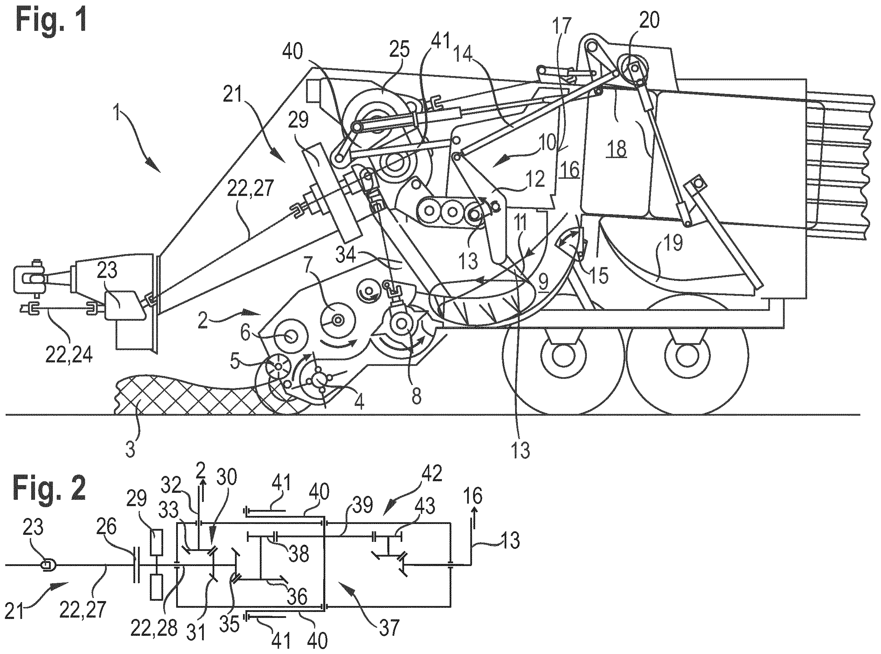

Die in Fig. 1 gezeigte Ballenpresse 1 ist als ein Anhänger zum Ankoppeln an ein nicht dargestelltes Zugfahrzeug ausgelegt.

Eine Aufnahmevorrichtung 2 der Ballenpresse 1, auch als Pickup bezeichnet, dient zum Aufnehmen von Erntegut 3 vom Boden. Die Aufnahmevorrichtung 2 umfasst eine mit abstehenden Zinken besetzte Aufsammeltrommel 4, die in einer solchen Richtung drehangetrieben ist, dass sie das Erntegut 3 auf dem Boden vor sich herschiebt und es dabei anhebt und in einen durch Rollen 5, 6 eines Niederhalters begrenzten Spalt hineinzieht. Eine Schneckenwalze 7 ist mit zwei Schnecken von entgegengesetztem Drehsinn besetzt, die das Erntegut zur Mitte der Ballenpresse zusammenschieben und einem Schneidrotor 8 zuführen. Ortsfeste Messer greifen in Zwischenräume des Schneidrotors 8 ein, um das Erntegut zu zerkleinern. Das zerkleinerte Erntegut wird durch die Drehung des Schneidrotors 8 einem Sammelkanal 9 zugeführt.

Der Sammelkanal 9 ist nach oben durch eine konvex gekrümmte und mit Längsschlitzen versehene Decke begrenzt, durch die Zinken 11 eines Raffers 10 in den Kanal 9 eingreifen können. Die Zinken 11 sind an einem zweiarmigen Hebel 12 befestigt, von dem ein Angelpunkt, angetrieben und geführt durch einen Kurbelarm 13, mit einer ersten Frequenz um eine Drehachse des Kurbelarms 13 umläuft, während ein an einem von den Zinken 11 abgewandten Ende des Hebels 12 angreifender Lenker 14 mit einem ganzzahligen Bruchteil 1/n, z.B. der Hälfte oder einem Drittel, der Frequenz des Arms 13 angetrieben ist. Das Zusammenwirken von Arm 13 und Lenker 14 führt dazu, dass die Zinken 11 periodisch auf n verschiedenen Wegen den Sammelkanal 9 durchlaufen und dabei von dem Schneidrotor 8 zugeführtes Erntegut gegen eine bewegliche Sperre 15 am Ende des Sammelkanals 9 drücken und vorverdichten. Bei der n-ten Bewegung ist die Sperre 15 beiseite geklappt, so dass die Zinken 11 das Erntegut an der Sperre 15 vorbei in einen Presskanal 16 schieben.

In dem Presskanal 16 ist ein Presskolben 17 mit der gleichen Frequenz wie der Lenker 14 oszillierend angetrieben, um das neu zugeführte Erntegut gegen einen in Entstehung befindlichen Ballen 18 zu pressen, so dass dieser mit jedem Hub des Presskolbens 17 ein Stück weit wächst und im Presskanal 16 nach hinten verschoben wird.

Einer vereinfachten Ausgestaltung zufolge kann eine Unterseite des Presskolbens 17 die Funktion der Sperre 15 wahrnehmen, indem der Presskolben 17 jeweils nur bei jeder n-ten Bewegung des Raffers wie in Fig. 1 gezeigt so weit vorgezogen ist, dass er den Durchgang zwischen Sammelkanal 9 und Presskanal 16 freigibt und sonst den Ausgang des Presskanals 9 versperrt.

Wenn der Ballen 18 eine vorgesehene Größe erreicht hat, wird, während zwischen dem Presskolben 17 und dem Ballen 18 ein Zwischenraum offen ist, eine Bindenadel 19 durch diesen Zwischenraum hochgeschwenkt, um einen von der Bindenadel 19 geführten Bindegarnstrang einem Knoter 20 an der Oberseite des Presskanals 16 zuzuführen und das Bindegarn rings um den nun fertigen Ballen 18 zu verknoten.

Der Presskolben 17 sowie diverse Nebenaggregate der Ballenpresse 1, namentlich die Aufnahmevorrichtung 2, der Raffer 10 und der Knoter 20 sind über einen gemeinsamen Antriebsstrang 21 angetrieben. Eine Antriebswelle 22 dieses Antriebsstrangs 21 ist mit einer Zapfwellenkupplung zum formschlüssigen Ankuppeln an eine Zapfwelle eines nicht gezeigten Zugfahrzeugs wie etwa eines Traktors versehen. Ein Kardangelenk 23 unterteilt die Antriebswelle in einen im Wesentlichen horizontal orientierten, die Zapfwellenkupplung tragenden vorderen Wellenabschnitt 24 und einen hinteren Wellenabschnitt, der sich bis in ein Getriebegehäuse 25 erstreckt. Komponenten des Antriebsstrangs 21 sind schematisch in Fig. 2 dargestellt. Zu diesen Komponenten gehört eine Reibkupplung 26, die den hinteren Wellenabschnitt in einen antriebsseitigen Abschnitt 27 und einen abtriebsseitigen Abschnitt 28 unterteilt. Der abtriebsseitige Abschnitt 28 trägt ein Schwungrad 29. Jenseits des Schwungrads 29 ist eine Leistungsverzweigung 30 durch eine Kegelradstufe mit einem am Wellenabschnitt 28 festen Kegelrad 31 und einem an einer Zweigwelle 32 festen Kegelrad 33 gebildet. Die Kegelradstufe ist in einem Getriebegehäuse 25 untergebracht. Die Zweigwelle 32 ist aus dem Getriebegehäuse 25 herausgeführt, um über eine Welle 34 (siehe Fig. 1) die Aufnahmevorrichtung 2, insbesondere deren Aufsammeltrommel 4, und den Schneidrotor 8, anzutreiben.

Jenseits des Kegelrads 31 trägt der Wellenabschnitt 28 ein weiteres Kegelrad 35, das mit einem zweiten, größeren Kegelrad 36 kämmt, um eine erste Stufe eines Untersetzungsgetriebes 37 zu bilden. Das Kegelrad 36 ist drehfest mit einem Zahnrad 38 verbunden, das seinerseits mit einem zweiten, größeren Zahnrad 39 kämmt. Das Zahnrad 39 ist wiederum fest verbunden mit einem Kurbelarm 40 außerhalb des Getriebegehäuses 25, dessen Drehung über einen Lenker 41 (siehe Fig. 1) die oszillierende Bewegung des Presskolbens 17 im Presskanal 16 antreibt.

Das Zahnrad 39 und ein weiteres Zahnrad 43 mit einem Drittel des Durchmessers des Zahnrads 39 bilden ein Übersetzungsgetriebe 42, das den Kurbelarm 13, der den Hebel 12 des Raffers 10 antreibt, mit der dreifachen Frequenz des Presskolbens 17 bewegt.

Da mit dem in Fig. 2 gezeigten Aufbau das zum Antreiben der Aufnahmevorrichtung 2 und des Schneidrotors 8 benötigte Drehmoment von dem gesamten über die Antriebswelle 22 zugeführten Drehmoment vor dem Untersetzungsgetriebe 37 abgezweigt wird, ist letzteres nur noch mit dem zum Antreiben von Presskolben 17 und Raffer 10 benötigten Drehmoment belastet. Grundsätzlich wäre es möglich, auch das Antriebsmoment für den Raffer 10 vor dem Untersetzungsgetriebe 37 über eine weitere Leistungsverzweigung abzuzweigen, doch ist die in Fig. 2 gezeigte Variante aus Platzgründen bevorzugt. Während die Welle 34 mit einer ähnlich hohen Drehzahl wie die Zapfwelle rotieren kann und eine eventuell erforderliche Drehzahlanpassung zwischen der Welle 34 und zum Beispiel dem Schneidrotor 8 über eine zwischen der Welle 34 und dem Schneidrotor 8 zum Umlenken des Drehmoments ohnehin benötigte Kegelradstufe erfolgen kann, sind die Bewegungsfrequenzen des Presskolbens 17 und des Raffers 10 beide erheblich niedriger als die Drehzahl der Zapfwelle, so dass eine Leistungsverzweigung vom Wellenabschnitt 24 zum Raffer 10 Räder mit sehr stark unterschiedlichen Größen oder ein zweites mehrstufiges Untersetzungsgetriebe erforderlich machen und dementsprechend erheblichen Bauraum beanspruchen würde.

### Bezugszeichen

- 1: Ballenpresse
- 2: Aufnahmevorrichtung
- 3: Erntegut
- 4: Aufsammeltrommel
- 5: Rolle
- 6: Rolle
- 7: Schneckenwalze
- 8: Schneidrotor
- 9: Sammelkanal
- 10: Raffer
- 11: Zinken
- 12: Hebel
- 13: Kurbelarm
- 14: Lenker
- 15: Sperre
- 16: Presskanal
- 17: Presskolben
- 18: Ballen
- 19: Bindenadel
- 20: Knoter
- 21: Antriebsstrang
- 22: Antriebswelle
- 23: Kardangelenk
- 24: Wellenabschnitt
- 25: Getriebegehäuse
- 26: Reibkupplung
- 27: antriebsseitiger Abschnitt
- 28: abtriebsseitiger Abschnitt
- 29: Schwungrad
- 30: Leistungsverzweigung
- 31: Kegelrad
- 32: Zweigwelle
- 33: Kegelrad
- 34: Welle
- 35: Kegelrad
- 36: Kegelrad
- 37: Untersetzungsgetriebe
- 38: Zahnrad
- 39: Zahnrad
- 40: Kurbelarm
- 41: Lenker
- 42: Übersetzungsgetriebe
- 43: Zahnrad

## Patentansprüche

1. Quaderballenpresse (1) mit einem in einem Presskanal (16) oszillierend beweglichen Kolben (17) und wenigstens einem Nebenaggregat (2), wobei der Kolben (16) und das Nebenaggregat (2) über einen gemeinsamen Antriebsstrang (21) angetrieben sind, der einen Drehmomenteingangsanschluss, eine Leistungsverzweigung (30) und ein wenigstens den Presskolben (16) antreibendes Untersetzungsgetriebe (37) umfasst, wobei das Nebenaggregat (2) und das Untersetzungsgetriebe (37) parallel zueinander an die Leistungsverzweigung (30) angeschlossen sind, wobei die Leistungsverzweigung (30) eine Kegelradstufe umfasst, **dadurch gekennzeichnet, dass** das Untersetzungsgetriebe (37) wenigstens eine Kegelradstufe umfasst und dass die Kegelradstufen des Untersetzungsgetriebes (37) und der Leistungsverzweigung (30) auf einer gleichen Welle (22) angeordnete antriebsseitige Kegelräder (31, 35) umfassen.

2. Quaderballenpresse nach Anspruch 1, **dadurch gekennzeichnet, dass** ein Schwungrad (29) an einem Wellenabschnitt (27, 28) angeordnet ist, der den Drehmomenteingangsanschluss des Antriebsstrangs (21) mit der Leistungsverzweigung (30) verbindet.

3. Quaderballenpresse nach Anspruch 2, **dadurch gekennzeichnet, dass** an dem Wellenabschnitt (27, 28) zwischen dem Drehmomenteingangsanschluss und dem Schwungrad (29) eine Reibkupplung (26) vorgesehen ist.

4. Quaderballenpresse nach einem der vorhergehenden Ansprüche, **dadurch gekennzeichnet, dass** das Nebenaggregat (2) ein Schneidwerk (8) zum Zerkleinern von dem Presskanal (16) zuzuführendem Gut umfasst.

5. Quaderballenpresse nach einem der vorhergehenden Ansprüche, **dadurch gekennzeichnet, dass** die Leistungsverzweigung (30) eine Hauptwelle (22), die den Drehmomenteingangsanschluss mit dem Untersetzungsgetriebe (37) verbindet, und eine das Nebenaggregat (2) antreibende Zweigwelle (32) umfasst.

6. Quaderballenpresse nach Anspruch 1, **dadurch gekennzeichnet, dass** das Schwungrad (29) auf derselben Welle (22) wie die antriebsseitigen Kegelräder (31, 35) angeordnet ist.

7. Quaderballenpresse nach einem der vorhergehenden Ansprüche, **dadurch gekennzeichnet, dass** der Drehmomenteingangsanschluss eine Zapfwellenkupplung ist.

## Claims

1. A square bale press (1) comprising a piston (17) moveable oscillatingly in a pressing passage (16) and at least one ancillary assembly (2), wherein the piston (16) and the ancillary assembly (2) are driven by way of a common drive train (21) which includes a torque input connection, a power splitting means (30) and a reduction gear (37) driving at least the pressing piston (37), wherein the ancillary assembly (2) and the reduction gear (37) are connected in mutually parallel relationship to the power splitting means (30), wherein the power splitting means (30) includes a bevel gear stage, **characterised in that** the reduction gear (37) includes at least one bevel gear stage and that the bevel gear stages of the reduction gear (37) and the power splitting means (30) include drive-side bevel gears (31, 35) arranged on the same shaft (22).

2. A square bale press according to claim 1 **characterised in that** a flywheel (29) is arranged at a shaft portion (27, 28) which connects the torque input connection of the drive train (21) to the power splitting means (30).

3. A square bale press according to claim 2 **characterised in that** a friction clutch (26) is provided at the shaft portion (27, 28) between the torque input connection and the flywheel (29).

4. A square bale press according to one of the preceding claims **characterised in that** the ancillary assembly (2) includes a cutting mechanism (8) for chopping material to be fed to the pressing passage (16).

5. A square bale press according to one of the preceding claims **characterised in that** the power splitting means (30) includes a main shaft (22) connecting the torque input connection to the reduction gear (37) and a branch shaft (32) driving the ancillary assembly (2).

6. A square bale press according to claim 1 **characterised in that** the flywheel (29) is arranged on the same shaft (22) as the drive-side bevel gears (31, 35).

7. A square bale press according to one of the preceding claims **characterised in that** the torque input connection is a power take-off shaft coupling.

## Revendications

1. Presse à balles parallélépipédiques (1) comprenant un piston mobile (17) oscillant dans un canal de pressage (16) et au moins un organe auxiliaire (2), le piston (16) et l'organe auxiliaire (2) étant entraînés par l'intermédiaire d'une chaîne de transmission commune (21) qui comporte un raccord d'entrée de couple, un moyen de fractionnement de puissance (30) et un réducteur (37) entraînant au moins le piston de pressage (16), l'organe auxiliaire (2) et le réducteur (37) étant reliés parallèlement entre eux au moyen de fractionnement de puissance (30), le moyen de fractionnement de puissance (30) comportant un étage conique, **caractérisée en ce que** le réducteur (37) comporte au moins un étage conique, et **en ce que** les étages coniques du réducteur (37) et du moyen de fractionnement de puissance (30) comportent des pignons coniques côté menant (31, 35) montés sur un même arbre (22).

2. Presse à balles parallélépipédiques selon la revendication 1, **caractérisée en ce qu'**un volant d'inertie (29) est disposé sur une portion d'arbre (27, 28) qui relie le raccord d'entrée de couple de la chaîne de transmission (21) au moyen de fractionnement de puissance (30).

3. Presse à balles parallélépipédiques selon la revendication 2, **caractérisée en ce qu'**un accouplement à friction (26) est prévu sur la portion d'arbre (27, 28) entre le raccord d'entrée de couple et le volant d'inertie (29).

4. Presse à balles parallélépipédiques selon une des revendications précédentes, **caractérisée en ce que** l'organe auxiliaire (2) comporte un tablier de coupe (8) pour broyer du produit amené au canal de pressage (16).

5. Presse à balles parallélépipédiques selon une des revendications précédentes, **caractérisée en ce que** le moyen de fractionnement de puissance (30) comporte un arbre principal (22), qui relie le raccord d'entrée de couple au réducteur (37), et un arbre dérivé (32) entraînant l'organe auxiliaire (2).

6. Presse à balles parallélépipédiques selon la revendication 1, **caractérisé en ce que** le volant d'inertie (29) est disposé sur le même arbre (22) que les pignons coniques côté menant (31, 35).

7. Presse à balles parallélépipédiques selon une des revendications précédentes, **caractérisée en ce que** le raccord d'entrée de couple est un accouplement de prise de force.
